# EUROPEAN PATENT APPLICATION

(11) **EP 1 292 150 A2**
(43) Date of publication of application: **12.03.2003**
(21) Application number: 02256148.4
(22) Date of filing: 04.09.2002
(51) Int. Cl.: H04N 7/24

(54) **Image data providing system**

(30) Priority: 06.09.2001 KR 2001054875
(71) Applicant: SAMSUNG ELECTRONICS CO., LTD., Suwon-City, Kyungki-do (KR)
(72) Inventor: Kang, Gyung-mo, Gangnam-gu, Seoul (KR); Lee, Yung Lyul, Songpa-gu, Seoul (KR)
(74) Representative: Geary, Stuart Lloyd

(57) **Abstract**

A group of pictures and detailed information for a scene are stored in a first storing portion (110), while a lookup table, including location information and a frame number of an image of a certain format within the group of pictures, is stored in a second storing portion (120). When receiving from user information about a reproducing point of a request image, a data providing portion (130) searches the lookup table for a location of a file about the image of a certain format according to information about the time, i.e., the reproducing point .

The data providing portion (130) extracts image data from the first storing portion based on the searched location of the file and provides the user with the extracted image data. Based on the location information and the frame number of the intra picture that is written in advance according to the time, the image data corresponding to the user requested location is rapidly extracted and provided to the user.

## Description

The present invention relates to an image data providing system comprising memory means storing streamable image data for a plurality of frames and processing means responsive to a request to select and transmit one of said frames.

Improvements in a data compression and transmission technology have enabled an image data service provider to provide image data through wireless or wired connections. A typical example of an image data service provider is a data stream service provider that uses moving picture expert group (MPEG) technology. The MPEG technology is a standard technology for video image compression and transmission and there are several versions including MPEG-1, MPEG-2 and MPEG-4, some of which are already in use . MPEG-4 is most widely. Since high image data compression efficiency can be obtained using MPEG-4, images can be transmitted at a relatively lower bit rate, and also, mobile multimedia applications are possible.

Improvements in communication technology have also enabled a provider (server) to provide a viewer (user) with a image by providing the image data bilaterally upon a request from the viewer as well as unilaterally. A user can request image data in any location of a data bit stream as necessary.

Conventionally, when the user requests transmission of image data at a certain location in the data bit stream and images relating to the image data of the data bit stream are being provided, the server, which provides the image data, performs a 'bitstream parsing' process, by which the server randomly searches within the pictures bidirectionally with respect to the certain location. The bitstream parsing process searches for the intra picture closest to the user requested location in corresponding groups of pictures based on a size of a file corresponding to a group of the pictures. Among the intra pictures searched by the bitstream parsing process, the server transmits the user the intra picture closest to the user requested location. Accordingly, it is sometimes hard to find an accurate image of the location requested by the user.

Conventionally, the server also performs a search for the intra picture randomly by the bitstream parsing process in response to a random access request. Accordingly, it is hard to perform a fast search. During the high-speed reproducing/reversal reproducing processes, also, since the search is performed in such a manner that the image data of the intra pictures located before and after a current picture are compared with the image data of the current picture, it takes a longer time to perform a search process. Furthermore, when information for a scene (picture) of the user requested location is determined to be different from that of the current picture, the image data of the requested location cannot be obtained only with current elementary stream information relating to the current picture.

An image data providing system according to the present invention is characterised by said frames being respectively compressed using either one of at least one differential coding technique or one of at least one self-contained coding technique, a list of the locations of the frames coded using self-contained coding techniques indexed by their temporal positions within their respective streams, the list being stored in memory means, and the processing means being responsive to a request containing a temporal criterion to obtain the location of a frame from said list and then transmit the frame at the obtained location.

Preferably, streamable image data forming one content item comprises a plurality of groups of frames, each group comprising a frame coded using a self-contained coding technique.

Additional preferred and optional features are set out in claims 3 to 33 appended hereto.

Embodiments of the present invention will now be described, by way of example, with reference to the accompanying drawings, in which:
Figure 1 is a block diagram of an image providing system according to an embodiment of the present invention;
Figure 2 is a view showing image data stored in a first storing portion of the image providing system of Figure 1;
Figure 3 is a view showing a lookup table having information relating to respective ones of groups of pictures of Figure 2;
Figure 4 is a flowchart explaining a method of providing the image data according to another embodiment of the present invention; and
Figure 5 is a flowchart explaining a process of extracting the image data when elementary streams of a currently reproduced location and a user requested location are identical with each other in the method of Figure 4.

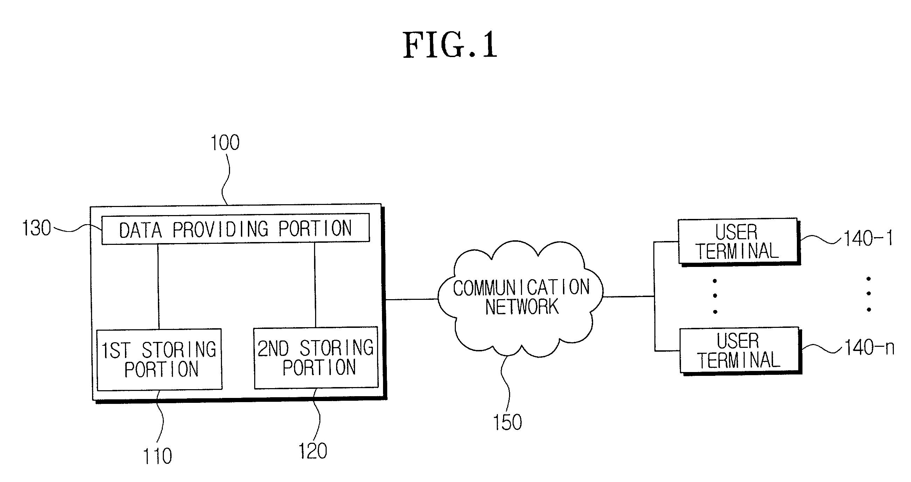

Referring to Figure 1, an image data providing system 100 includes a first storing portion 110, a second storing portion 120 and a data providing portion 130.

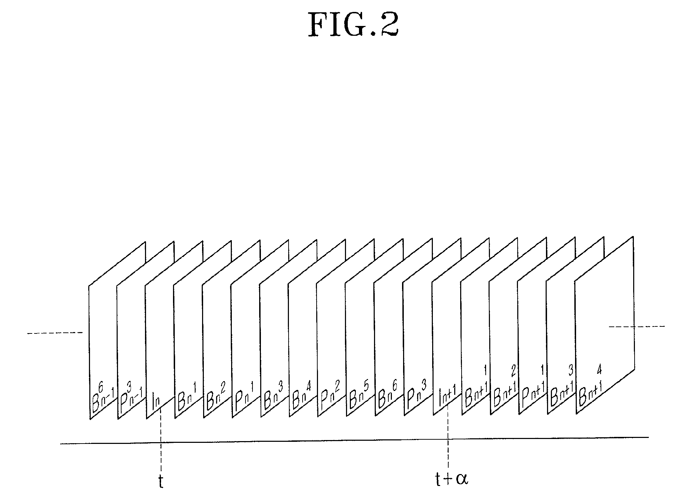

The first storing portion 110 stores image data arranged in groups of pictures. Figure 2 shows one example of a data stream having a plurality of elementary streams or groups of pictures including the image data stored in the first storing portion 110.

Referring to Figure 2, one group of pictures includes one intra-coded picture In, three predictive-coded pictures Pn1, Pn2, Pn3 and six bidirectionally predictive coded pictures Bn1, Bn2, Bn3, Bn4, Bn5, Bn6.

The intra-coded picture can come at any location in the data stream and is used for random access. The intra-coded picture is coded without reference to any other pictures. Although the intra-coded picture is encoded by using a Joint Photographic Expert Group (JPEG) technology, in one of MPEG levels, the intra-coded picture is compressed on a real time basis. The compression of the intra-coded picture shows the lowest compression rate in the MPEG levels.

In a coding and decoding method for the predictive-coded pictures, information about a previous intra-coded picture and about a previous predictive-coded picture is used. The previous predictive-coded picture is obtained based on the fact that whole images of an object do not change but blocks of the images move from an original position. More specifically, if there is a movement in an image (picture or scene), most of the time, it is just the movement of a block from the original position without any significant change in the object itself. Accordingly, given the fact that there are actually small changes between the current screen and the preceding screen, the coding method can be performed only for the difference between the preceding and current screens.

The coding and decoding method of the bidirectionally predictive coded pictures uses the intra-coded pictures and the predictive-coded pictures before/after the current picture. When using the bidirectionally predictive coded picture, a high compression rate can be obtained. The bidirectionally predictive coded picture has a difference value between a previous intra-coded or previous predictive coded picture formed before the bidirectionally predictive coded picture and a next intra-coded or next predictive coded picture formed after the bidirectionally predictive coded picture.

The second storing portion 120 stores a lookup table that includes location information and frame numbers for the intra-coded pictures.

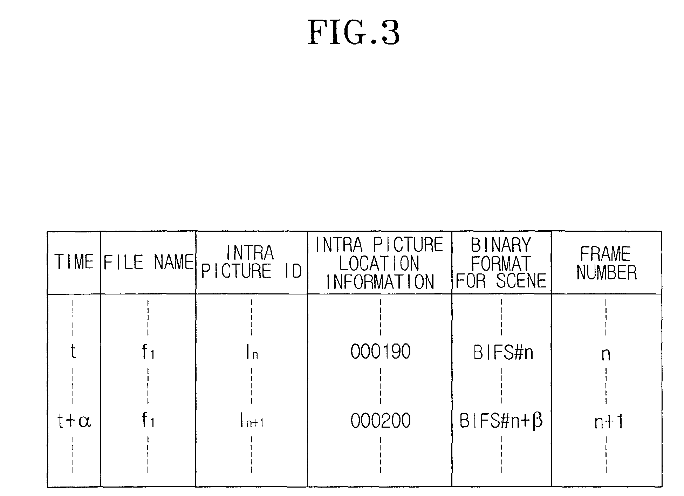

Referring to Figure 3, the lookup table is written with information about the intra-coded pictures on a time basis. The information written in the lookup table includes a file name, an intra-coded picture ID, location information on each intra-coded picture and a binary format for scene information or a scene (BISF).

As shown in the lookup table of Figure 3, the file name indicating a group of pictures for a time (t) is *f*_{*1*}, the intra-coded picture ID of the corresponding intra-coded picture is *I*_{*n*}, the location information of the corresponding intra-coded picture (i.e., physical position of the corresponding intra-coded picture in the first storing portion 110) is *000190*, the frame number is *n*, and the binary format for the scene (BIFS) is *BIFS#n.* Also, the name of the file having the Group of Picture for the time (t+a) is *f*_{*1*}, an ID of the corresponding intra-coded picture is *I*_{*n*}*+1*, the location information of the corresponding intra-coded picture (i.e., the physical position of the corresponding intra-coded picture in the first storing portion) is *000200,* the frame number is *n+1*, and binary format for scene (BIFS) is *BIFS#n+β.*
Upon receipt of user information about a reproducing point of an image from a user, the data providing portion 130 searches the lookup table for location information of a file of a group of pictures relating to an image of certain format based on time information that corresponds to the reproducing point of the user information. Then the data providing portion 130 extracts image data from the first storing portion 110 based on the location information of the file and provides the user with the extracted data.

In the present embodiment of the present invention, the image data providing system 100 is connected to user terminals 140-1 through 140-n by a wired or a wireless communication network 150 including, for example, the Internet. Also, albeit not shown in the drawings, the image data providing system 100 may include a communicating portion that transmits and receives data from and to the user terminals 140-1 through 140-n, and a controlling portion that controls the operation of the image data providing system 100.

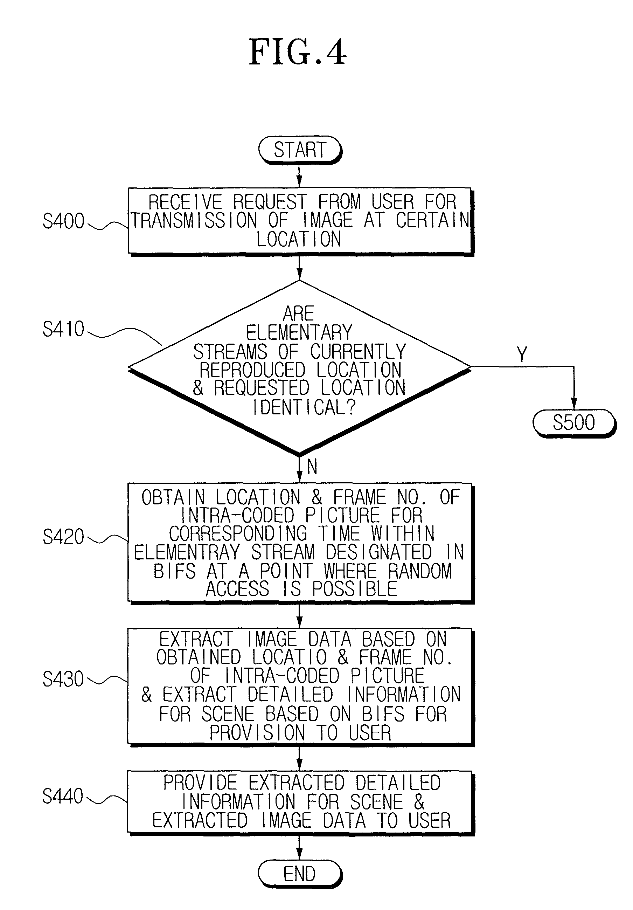

Referring to Figure 4 which illustrates a method of providing image data, first, a request is made by the user for an image (scene or picture) at a certain requested location in operation S400. Next, the data providing portion 130 checks whether the current location of pictures being currently reproduced has the same elementary stream as that of the requested location in operation S410. The operation S410 is performed by searching the lookup table for a BIFS corresponding to time information of the requested location.

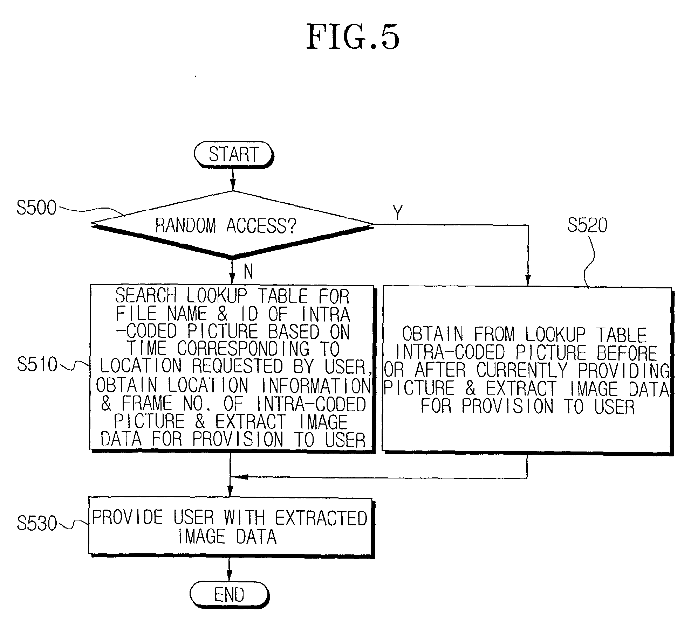

When it is determined that the elementary streams of the certain requested location and the current location are identical with each other, an operation S500 of Figure 5 is performed. If it is determined that the elementary streams are not identical with each other, the data providing portion 130 obtains the location information and the frame number of an intra-coded picture corresponding to the time information within the elementary stream of the certain requested location designated in the BIFS at a point where a random access is possible (available) in operation S420. Based on the location information and the frame number of the intra-coded picture, the data providing portion 130 extracts the detailed information for the scene (image or picture) and the image data from the first storing portion 110 in operation S430. The extracted detailed information and the image data are provided through the communication network 150 to the user terminals 140-1 through 140-n in operation S440.

Referring to Figure 5, when the elementary streams of the currently reproduced location and the requested location are identical with each other, it is determined whether the request is for a random access or not in operation S500. If it is determined that the requested is for a random access in operation S500, the data providing portion 130 searches the lookup table for the file name of the group of the pictures and the ID of an intra-coded picture based on the time information of the requested location, obtains the location information and the frame number of the intra-coded picture, and then extracts from the first storing portion 110 the image data to provide to the user in operation S510.

If it is determined that the request is not for random access but for one of the high-speed reproducing/reversal reproducing processes in operation S500, the data providing portion 130 obtains the location information and the frame number of the intra-coded picture before or after the currently provided (reproduced) pictures from the lookup table, and extracts the image data from the first storing portion 110 to provide to the user in operation S520.

The data providing portion 130 provides the user terminals 140-1 through 140-n with the image data extracted from S510 and S520 through the communication network 150.

In the above description, operation S500 is performed in accordance with the result of operation S400 as an example. However, when there is the request from the user to obtain the image at a certain requested location, whether the elementary streams of the currently reproduced location and the requested location are identical with each other can also be determined after operations S500 through S520. And in this case, if it is determined that the elementary streams of the currently reproduced location and the requested location are identical with each other, the extracted image data is provided to the user terminals 140-1 through 140-n through the communication network 150. Otherwise, i.e., if it is determined that the elementary streams of the currently reproduced location and the requested location are not identical with each other, operations S420 through S440 are performed.

Although the image data providing system and method thereof have been described above based on the MPEG 4 standard, the image data providing system and method thereof according to the present invention can also be applied to other standards that are provided in a bitstream format.

According to the present invention, a service provider can quickly extract and provide the user with the image data of the image at the user's requested location based on the location information and the frame number of the intra-coded picture that is written in advance on a time basis. Further, when the detailed information for a scene of the extracted image data is different from that of the currently reproduced image, the service provider can extract both the detailed information for scene at the user's requested location and necessary image data from binary format information for scene, the file name, the location information and the frame number of the infra-coded picture and provide the user with the results.

## Claims

1. An image data providing system comprising:
memory means (110) storing streamable image data for a plurality of frames; and
processing means (130) responsive to a request to select and transmit one of said frames,
**characterised by**
said frames being respectively compressed using either one of at least one differential coding technique or one of at least one self-contained coding technique;
a list of the locations of the frames coded using self-contained coding techniques indexed by their temporal positions within their respective streams, the list being stored in memory means; and
the processing means (130) being responsive to a request containing a temporal criterion to obtain the location of a frame from said list and then transmit the frame at the obtained location.

2. An image data providing system according to claim 1, wherein streamable image data forming one content item comprises a plurality of groups of frames, each group comprising a frame coded using a self-contained coding technique.

3. An image data providing system, comprising:
a first storing portion storing elementary streams each having a group of pictures;
a second storing portion storing a lookup table having location information and a frame number of an image of a predetermined format within each group of the pictures; and
a data providing portion receiving user information about a reproducing point of a request scene, searching the lookup table for the location information of a file name, which is one of the groups of the pictures, relating to the image of the predetermined format based on time information corresponding to the reproducing point of the request scene, extracting image data from the first storing portion based on the location information of the file name, and providing the user with the extracted image data.

4. The image data providing system of claim 3, wherein, when the user information about the reproducing point of the request scene is a random access request, the data providing portion searches the lookup table based on the time information for the file name and an ID of an intra picture, obtains the location information and the frame number of the intra picture, and searches a location of the file name from the first storing portion.

5. The image data providing system of claim 4, wherein, when a first one of elementary streams having the image data extracted with respect to the reproducing point is different from a second one of elementary streams having the image data being currently provided, the data providing portion obtains the location information and the frame number of the intra picture of the first elementary stream that is designated by a binary format for scene (BIFS) corresponding to a picture accessible by the random access, searches a location of the file name in response to the location information and frame number, and provides the user with detailed information about a scene and the image data corresponding to the location of the file name.

6. The image data providing system of claim 3, wherein, when the user information about the reproducing point of the request scene is one of a high-speed reproducing and a high-speed reversal reproducing processes, the data providing portion obtains from the lookup table, which includes the location information and the frame numbers of each intra picture, the location information and the frame number of the intra picture before and after a currently reproduced image and searches for a location of the file name.

7. The image data providing system of claim 6, wherein the lookup table comprises detailed information about the scene according to time, an ID of the intra picture, and the file name .

8. An image data providing method, comprising :
receiving user information about a reproducing point of a scene from a user;
searching a location of a file having an image of a predetermined format according to time information that corresponds to the reproducing point ;
extracting image data from a group of pictures based on the location of the file; and
providing the user with the extracted image data.

9. The image providing method of claim 8, wherein, when the user information about the reproducing point is one of a high-speed reproducing process and a high-speed reversal reproducing process, the searching of the location of the file comprises obtaining from the lookup table, which includes the location information and the frame numbers of each intra picture, the location information and the frame number of the intra picture before and after a currently reproduced image and searching for the location of the file.

10. The image providing method of claim 8, wherein, when the received user information about the reproducing point is a request for a random access, the searching of the location of the file comprises searching the lookup table based on the time information to obtain a file name and an ID of an intra picture relating to reproducing point, obtaining the location information and the frame number of the intra picture in response to the file name and the ID, and searching for a location of the file.

11. The image providing method of claim 10, wherein, when a first elementary stream of the image data extracted with respect to the reproducing point is different from a second elementary stream of the image data being currently provided, the searching of the location of the file comprises obtaining from the lookup table the location information and the frame number of the intra picture of the elementary stream that is designated by a binary format for scene (BIFS) at a place accessible by the random access, searching for the location of the file name relating to the first elementary stream, and providing the user with detailed information for a scene and image data corresponding to the location of the file.

12. The image data providing method of claim 11, wherein the lookup table comprises detailed information for the scene according to the time information, the ID of the intra picture and the file name corresponding to the user information.

13. A method in an image data providing system having elementary streams with groups of pictures, comprising:
receiving user information about a reproducing point of a request scene;
determining whether a first one of elementary streams corresponding to the reproducing point of the user information is different from a second one of elementary streams which is currently provided in the image providing system;
searching a location of a file of the first elementary stream in response to time information corresponding to the reproducing point of the user information;
extracting image data as the request scene from groups of the pictures based on the location of the file.

14. The method of claim 13, wherein the searching of the location comprises:
determining whether the user information includes a random access request when the first elementary stream corresponding to the reproducing point of the user information is not different from the second elementary stream which is currently provided in the image providing system; and
obtaining an intra-coded picture before or after a currently providing picture as the image data when the user information includes a random access.

15. The method of claim 14, wherein the searching of the location comprises:
searching the location of the file, an ID of a second intra-coded picture based on the time information, and a frame number of the intra-coded picture when the user information does not include the random access request.

16. The method of claim 14, wherein the searching of the location comprises:
determining whether the user information includes one of a high speed reproducing process and a high speed reverse reproducing process to extract the image data from the elementary streams.

17. The method of claim 16, wherein the searching of the location comprises:
obtaining the location information and a frame number of an intra-coded picture located before or after the second elementary stream.

18. The method of claim 17, wherein the extracting of the image data comprises:
extracting the image data from the elementary streams base on the location information and the frame number.

19. The method of claim 15, wherein the searching of the location comprises:
extracting the image data based on the location of the file, the ID, and the frame number of the second intra-coded picture from the elementary streams.

20. The method of claim 13, wherein the searching of the location comprises:
obtaining the location of the file and a frame number of an intra-coded picture relating to the first elementary stream corresponding to the time information to extract the image data when the first elementary stream corresponding to the reproducing point of the user information is different from the second elementary stream.

21. The method of claim 20, wherein the image data providing system comprises a memory storing a binary format for a scene (BIFS) corresponding to each one of the groups of the pictures, and the searching of the location comprises:
obtaining the intra-coded picture within the first elementary stream designated by the BIFS corresponding to the time information at a point where a random access is available to select the intra-coded picture in the first elementary stream.

22. The method of claim 20, wherein the extracting of the image data comprises:
extracting the intra-coded picture based on the location of the file and the frame number of the intra-coded picture from the first elementary stream as the image data.

23. The method of claim 22, wherein the extracting of the image data comprises:
extracting detailed information corresponding to the intra-coded picture based on the BIFS.

24. The method of claim 23, wherein the detailed information is different from the image data.

25. The method of claim 20, wherein the extracting of the image data comprises:
generating the extracting detailed information and the extracted image data in response to the request scene.

26. An image providing system, comprising:
a memory storing elementary streams each having a group of pictures, storing a lookup table having location information, a file name indicating each group of the pictures, and a frame number of each image of a predetermined format within each of the elementary streams; and
a data providing portion receiving user information about a reproducing point of a request scene, searching the lookup table for the location information including the file name based on time information corresponding to the reproducing point of the request scene, extracting image data from the memory based on the location information and the file name, and generating the extracted image data in response to the user information.

27. The image providing system of claim 26, wherein the system further comprising a communication network to be coupled to an external user terminal, and the data providing portion receives the producing point of the request scene from the external user terminal through the communication network.

28. The image providing system of claim 27, wherein the data providing portion provides the external user terminal with the extracted image data.

29. The image providing system of claim 27, wherein the communication network is a wire communication network or a wireless communication network.

30. The image providing system of claim 27, wherein the communication network is an Internet.

31. The image providing system of claim 27, wherein the lookup table of the memory stores time information, an intra picture ID, intra picture location information, binary format for scene, and the frame number corresponding to respective ones of the pictures of the elementary streams.

32. The image providing system of claim 27, wherein the data providing portion extracts one of the time information, an intra picture ID, intra picture location information, binary format for scene, and the frame number as detailed information other than the image data in response to the user information.

33. The image providing system of claim 27, wherein the data providing portion generates the extracted image data and the extracted detail information.
